# EUROPEAN PATENT APPLICATION

(11) **EP 0 982 868 A2**
(43) Date of publication of application: **01.03.2000**
(21) Application number: 99306935.0
(22) Date of filing: 31.08.1999
(51) Int. Cl.: H04B 1/20, H04L 12/28

(54) **Remote access system**

(30) Priority: 28.08.1998 GB 9818783
(71) Applicant: Goodfellow, James, Paisley PA2 7RU (GB); Jefferies, David, Marlow, Bucks SL7 2DP (GB)
(72) Inventor: Goodfellow, James, Paisley PA2 7RU (GB); Jefferies, David, Marlow, Bucks SL7 2DP (GB)
(74) Representative: McKechnie, Neil Henry

(57) **Abstract**

The present invention relates to a remote access system comprising an input/output device (I/O) a central system unit and communication means between the input/output device and the central system unit. The central system unit provides access for the input/output device to a selected one of a range of electronic information sources such as television and radio channels and a Personal Computer. The communication means allows the input/output device to access the system unit from a plurality of different locations.

## Description

This invention relates to a remote access system especially but not exclusively for use in providing remote access to computer equipment and radio/television receiving apparatus.

In the home domestic environment there are a growing number of electronic systems available for use. The number of homes having a personal computer is increasing steadily and the growth of satellite and cable broadcast systems has made available a large, and growing, number of radio and TV channels. There are in essence a considerably greater number of sources of electronic information than can be accessed at one time within the home.

To some extent televisions, radios and personal computers can be positioned in different locations about the home so tht each can be used without conflict with the others. Obviously some will be in less desirable locations than others and in any event if different family members are using different items of equipment then it will not be possible for the family members to spend time together at the same time.

Furthermore even for the single user there is the need to move around the home to access different equipment.

In earlier British Patent Application No GB9515579.2 there is described a system providing remote access to a personal computer. A hand held data entry pad communicates remotely, preferably by infra red, with a personal computer located elsewhere in the house. A user can access most of the available features of the computer using the pad from a preferred location in the house.

The system described is however only suitable for use with a personal computer. The system is not designed to provide a means of access to other information services.

It is an object of the present invention to provide a means of remotely accessing a range of information sources on a selective basis.

According to the present invention there is provided a remote access system comprising an input/output device, (I/0) a central system unit and wireless communication means between the input/output device and the central system unit characterised in that the central system unit provides access for the input/output device to a selected one of a range of electronic information sources.

Said electronic information sources may include, but are not limited to, satellite television, cable television, terrestrial television, radio, a local personal computer and remote computer systems via a telecommunications link.

Preferably the wireless communication means comprises an infra red (IR) or radio frequency (RF) link.

A plurality of I/O devices may be provided each operating on a different frequency and communicating with an associated access circuit within the central system unit.

Preferably the or each I/O device is an LCD display unit.

The LCD display unit may be either touch sensitive or provided with a trackball and input switch.

Preferably also the LCD display unit is provided with a power source in the form of a rechargeable battery pack.

Means may be provided on the central system unit for receiving the LCD display units and providing a power source for recharging the LCD battery pack.

Preferably also the I/O device includes means for selecting which one of the information sources associated with the central system unit the I/O device will access.

Preferably also the I/O device includes connection means for a further I/O device such as a keyboard.

Preferably also the central system unit is controlled by a personal computer (PC).

The personal computer may be adapted to provide access to additional external information input or output systems such as telephones, answering machines, fax machines and printers.

Further according to the present invention there is provided a remote access system comprising an input/output device (I/O) a central system unit and communication means between the input/output device and the central system unit characterised in that the central system unit provides access for the input/output device to a selected one of a range of electronic information sources and in that the communication means allows the input/output device to access the system unit from a plurality of different locations.

The communicaton means may be a hard wired system to which the I/O device connects, a wireless system such as infra-red or radio frequency or a combination of said means.

Embodiments of the present invention will now be described by way of example with reference to the accompanying drawings in which:-
Figure 1 is a block schematic diagram of a system unit of a remote access system in accordance with the present invention; and
Figure 2 is a block schematic diagram of a control pad input/output device for use with the system unit of Figure 1.

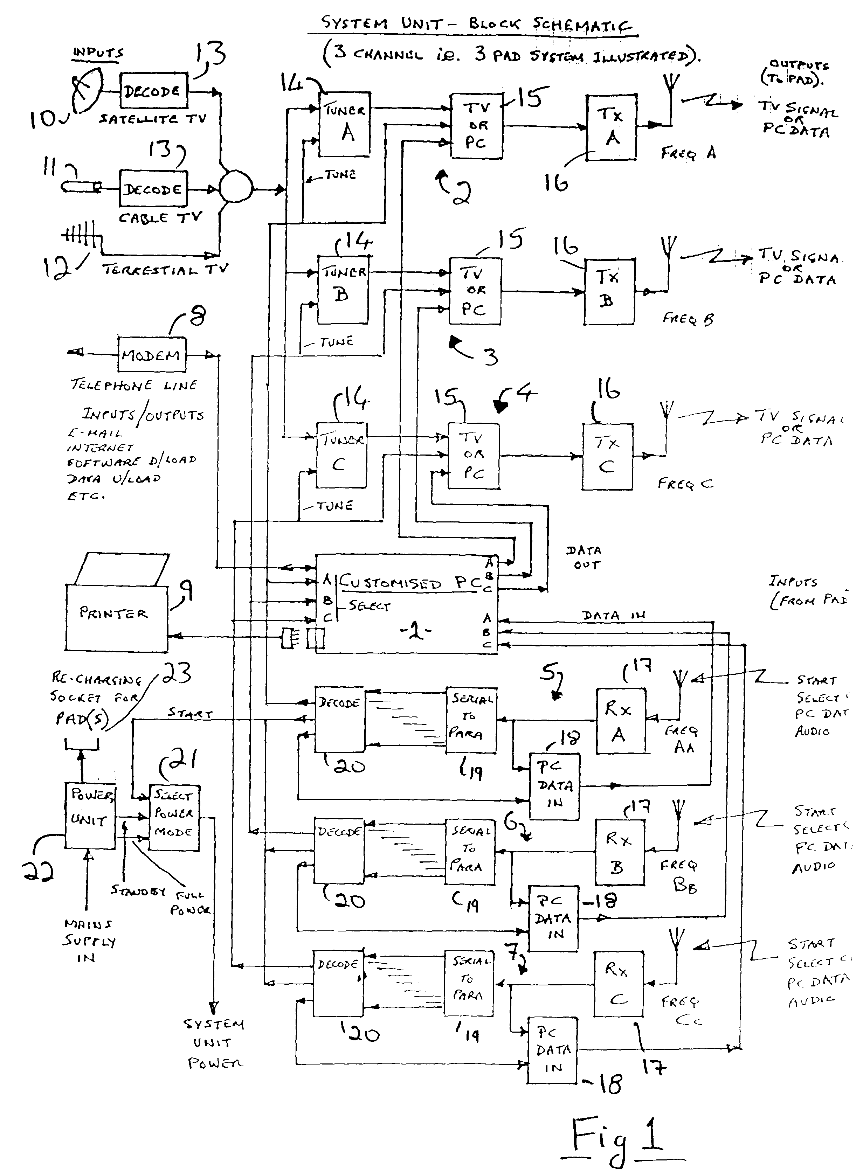

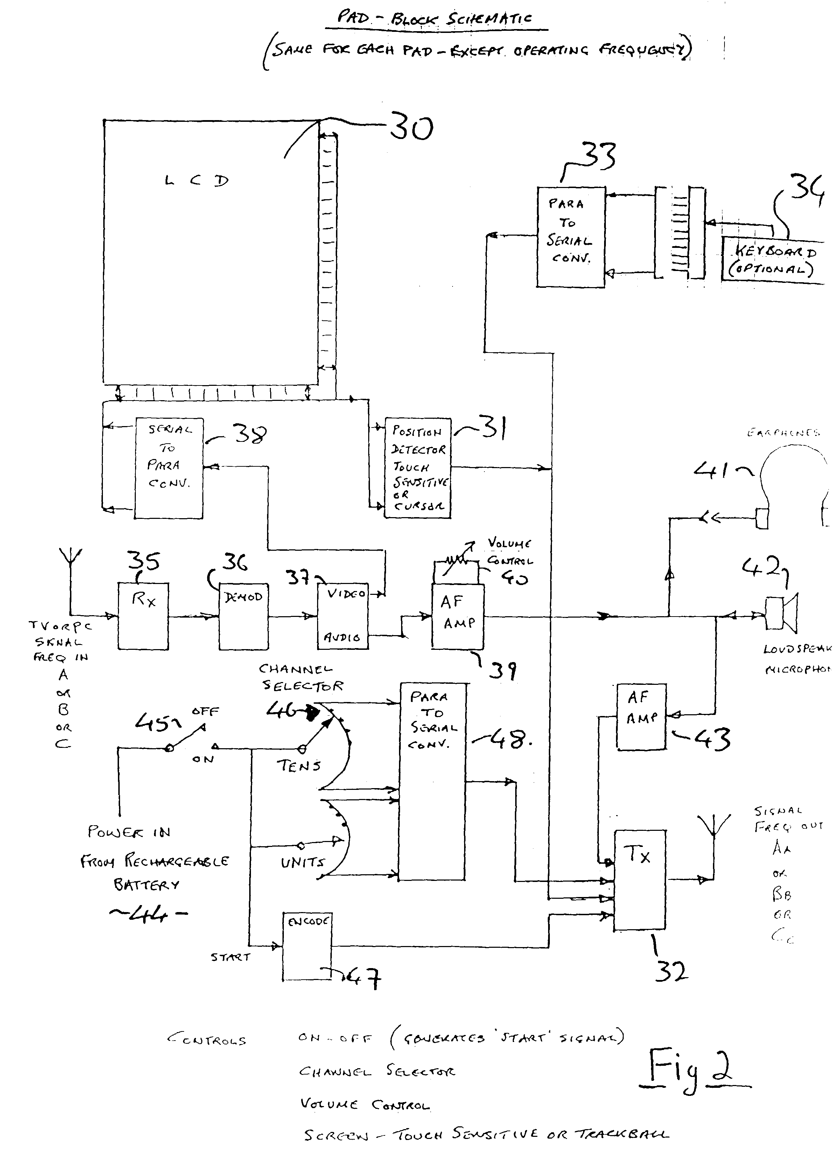

Referring to the drawings a remote access system in accordance with the present invention comprises a central system unit, shown schematically in Figure 1, and a number of control pads, an example of which is shown schematically in Figure 2.

The central system unit illustrated is a three channel system (channels A, B and C) and thus is suitable for use in conjunction with three input/output (I/O) devices. The central system unit comprises a customised PC 1, which provides overall control of the system, connection to output circuits 2,3,4, and input circuits 5,6,7 for each of the channels A B and C respectively. The PC 1 also has connections for a modem 8 and a printer 9. External satellite TV 10, cable TV 11 and terrestrial TV 12 input devices are connected to the system via decoders 13 as necessary.

Each output circuit 2,3,4 comprises a tuner 14, a TV or PC selector 15 and a radio frequency transmission system 16.

Each input circuit 5,6,7, comprises a radio frequency receiver system 17, a PC data in circuit 18, a serial to parallel converter 19 and a decoder 20. The decoders 20 are also connected to a power select mode switch 21 which is in turn connected to a power unit 22. The power unit 22 has a socket 23 which receives an I/O device and provides a recharging facility.

Each Input/Output device is in the form of an LCD Pad 30 of a size appropriate for easy handling but capable of providing a viewing screen of a size comfortable for the user. The pad 30 has a user interface provided by a touch sensitive screen assembly and/or a trackball and cursor with an enter switch. In either case a position detector circuit 31 is provided which connects both to a transmitter 32 and a suitable converter 33 for connection to an optional keyboard 34. A receiver 35 is provided for receiving a signal from the corresponding channel transmitter on the system unit and connects to a demodulator 36 and video/audio splitter 37. The video and audio signals thus derived are fed to a serial to parallel converter 38 and an audio frequency amplifier 39 respectively. The converter 38 drives the LCD pad 30 and the amplifier 39 provides an output, via a volume control 40, for earphones 41 and a loudspeaker 42. The loudspeaker 42 can also function as a microphone and connects to the transmitter 32 via an amplifier 43. Power for the input/output device is provided by a rechargeable battery 44 which connects via an on/off switch 45 to a channel selector 46 and start signal encoder 47. The channel selector 46 connects to the transmitter 32 through a parallel to serial converter 48.

In use the system would normally be in a stand-by mode with none of the main circuitry operational. Whenever a pad 30 is switched on a start signal is generated which switches the system unit power unit 22 to full power. The channel selected by the channel selector 46 is selected by the appropriate tuner 14 for the pad 30 and the signal transmitter back to the pad 30 for display.

The selected channel may be one of the TV channels or the PC 1. In any event the relevant tuner 14 converts the incoming signal to an appropriate intermediate frequency. When a TV channel is selected this signal modulates the associated transmitter 16 whose output frequency matches the pad 30. The power output from the transmitter 16 is sufficient for the range required within the current regulations. The frequency chosen is appropriate to the application with typically a band width of 5 MHz being required for a colour TV channel. In the present embodiment three frequencies would be required in the chosen band. Obviously embodiments having more (or less) than three pads are envisaged also. The PC output is arranged to occupy an otherwise unused channel, for example 99. For each channel the receiver has an offset frequency to allow simultaneous transfer for data and control signals back from the pad to the system unit. Each of the remaining pads 30 can similarly be tuned to a desired channel allowing individual system users to view different information sources.

When connected to the PC channel the pad 3 provides a standard range of input/output options but the keyboard 34 allows for data entry which is beyond the practical capabilities of the pad 30. Similarly the use of the loudspeaker 42 in microphone mode allows for audio input to the PC 1 for use with, for example, voice recognition based dictation software. In any event the full range of PC features will be available at the pad 30 including external features such a E-mail, Internet access, software and data downloads via the modem 8. Information can also be printed out in hard copy at the printer 9.

After use the system reverts to the standby mode when all the pads 30 are turned off. The pads 30 can be inserted in the recharging socket 23 to recharge the internal battery 44. The type of battery 44 used provides a compromise between weight and bulk and operating time and a battery condition indicator can be provided to allow the need for recharging to be monitored.

Various modifications, improvements, and alternative embodiments are envisaged. For example additional system connections can be provided for other domestic electronic devices. Examples are fax machines, answering machines and telephones but in theory any domestic electrical equipment may be controlled in this way. Appropriate icons on the pad 30 would allow connection via the PC 1. For some applications infra red communication or a partially or wholly hard wired communication system between the I/O devices and the system unit may be used.

Receiving of radio transmissions is also feasible and by using 2 channels and 2 pads stereo video outputs are possible.

Further modifications and improvements may be incorporated without departing from the scope of the invention herein intended.

## Claims

1. A remote access system comprising an input/output device, (I/O) a central system unit and wireless communication means between the input/output device and the central system unit characterised in that the central system unit provides access for the input/output device to a selected one of a range of electronic information sources.

2. A remote access system as claimed in Claim 1, wherein said electronic information sources may include, but are not limited to, satellite television, cable television, terrestrial television, radio, a local personal computer and remote computer systems via a telecommunications link.

3. A remote access system as claimed in Claim 1 or 2, wherein a plurality of I/O devices are provided each operating on a different frequency and communicating with an associated access circuit within the central system unit.

4. A remote access system as claimed in Claim 1, 2 or 3 wherein the or each I/O device is an LCD display unit.

5. A remote access system as claimed in Claim 4, wherein the LCD display unit is either touch sensitive or provided with a trackball and input switch.

6. A remote access system as claimed in Claim 4 or 5, wherein the LCD display unit is provided with a power source in the form of a rechargeable battery pack.

7. A remote access system as claimed in Claim 6, wherein means are provided on the central system unit for receiving the LCD display units and providing a power source for recharging the LCD battery pack.

8. A remote access system as claimed in any one of the preceding Claims, wherein the I/O device includes means for selecting which one of the information sources associated with the central system unit the I/O device will access.

9. A remote access system as claimed in any one of the preceding Claims, wherein the I/O device includes connection means for a further I/O device such as a keyboard.

10. A remote access system as claimed in any one of the preceding Claims, wherein the central system unit is controlled by a personal computer (PC).

11. A remote access system as claimed in Claim 10, wherein the personal computer is adapted to provide access to additional external information input or output systems such as telephones, answering machines, fax machines and printers.

12. A remote access system comprising an input/output device (I/O) a central system unit and communication means between the input/output device and the central system unit characterised in that the central system unit provides access for the input/output device to a selected one of a range of electronic information sources and in that the communication means allows the input-output device to access the system unit from a plurality of different locations.
